Europäisches Patentamt

European Patent Office

Office européen des brevets

(19)

(11) Numéro de publication : **0 206 878**
**B1**

(12) **FASCICULE DE BREVET EUROPÉEN**

(45) Date de publication du fascicule du brevet :
09.08.89

(51) Int. Cl.⁴ : **G 02 F 1/13**

(21) Numéro de dépôt : 86401180.4

(22) Date de dépôt : 03.06.86

(54) **Dispositif perfectionné d'affichage comportant un afficheur statique type écran plat, tel qu'un afficheur à cristaux liquides.**

(30) Priorité : 05.06.85 FR 8508531

(43) Date de publication de la demande :
30.12.86 Bulletin 86/52

(45) Mention de la délivrance du brevet :
09.08.89 Bulletin 89/32

(84) Etats contractants désignés :
DE FR GB IT

(56) Documents cités :
DE—A— 2 910 779
DE—A— 3 105 981
GB—A— 1 442 249
GB—A— 2 043 979
US—A— 3 349 289
PATENTS ABSTRACTS OF JAPAN, vol. 7, no. 60 (P-182)[1205], 12 mars 1983 & JP - A - 57 205 711
PATENTS ABSTRACTS OF JAPAN, vol. 8, no. 92 (P-271)[1529], 27 avril 1984 & JP - A - 59 7343

(73) Titulaire : **JAEGER**
**2, rue Baudin**
**F-92303 Levallois-Perret (FR)**

(72) Inventeur : **Granger, Jacques**
**1, rue Ed. Branly**
**F-78400 Chatou (FR)**
Inventeur : **Guirauton, Pascal**
**52 bis, rue de la République**
**F-95370 Montigny Les Cormeilles (FR)**

(74) Mandataire : **Martin, Jean-Jacques et al**
**Cabinet REGIMBEAU 26, Avenue Kléber**
**F-75116 Paris (FR)**

## Description

La présente invention concerne les dispositifs d'affichage comportant un afficheur statique type écran plat tel qu'un afficheur à cristaux liquides.

La présente invention trouve notamment application dans la réalisation de montres digitales pour véhicules automobiles. Cependant, cet exemple d'application ne doit pas être considéré comme limitatif dans le cadre de la présente invention.

Les dispositifs d'affichage comportant un afficheur statique type écran plat jusqu'ici proposés comprennent d'une façon générale un boîtier creux moulé recevant un circuit imprimé qui supporte un circuit de commande de l'afficheur et les composants discrets associés au circuit de commande, une source lumineuse, un dispositif optique de renvoi à prisme conçu pour diriger la lumière émise par la source lumineuse sur l'arrière de l'afficheur, des premiers moyens de liaison électrique pour relier le circuit de commande à des moyens d'alimentation électrique externe et des seconds moyens de liaison électrique pour relier le circuit à l'afficheur, un couvercle, et des structures support de l'afficheur, du circuit imprimé, de la source lumineuse, du dispositif optique de renvoi à prisme et des moyens de liaison sur le boîtier creux.

Dans la suite de la description, le circuit de commande sera dénommé circuit pilote, sans que cette expression puisse être considérée comme limitative.

Le plus souvent, l'afficheur est disposé sensiblement parallèlement en regard du circuit imprimé supportant le circuit pilote et relié à celui-ci par l'intermédiaire de connecteurs en caoutchouc conducteur.

Pour des raisons d'encombrement, la source lumineuse doit alors nécessairement être placée en arrière du circuit imprimé et le dispositif optique de renvoi à prisme doit être adapté pour récupérer la lumière émise par la source lumineuse et être engagé entre le circuit imprimé et l'afficheur pour éclairer ce dernier par l'arrière.

Ces dispositifs d'affichage, en particulier en ce qui concerne la réalisation de leur boîtier, sont de structure compliquée et coûteux.

Par ailleurs, l'assemblage de ces dispositifs est complexe, en raison notamment du nombre de pièces intervenant dans leur fabrication.

Le but principal de la présente invention est de proposer un nouveau dispositif d'affichage qui soit économique, de réalisation moins complexe que les dispositifs antérieurement proposés, et surtout d'assemblage plus simple, et autorise une fabrication automatisée.

Ce but est atteint selon la présente invention grâce à un dispositif d'affichage comportant un afficheur statique type écran plat, tel qu'un afficheur à cristaux liquides, caractérisé par le fait qu'il comprend un boîtier support d'afficheur formé par pliage d'un panneau électriquement isolant muni d'une série de bandes en matériau électriquement conducteur aptes à relier l'afficheur et des moyens d'alimentation électrique de celui-ci.

Ainsi, selon la présente invention, il n'est pas nécessaire de prévoir sur le boîtier des structures support des moyens de liaison électrique. Par ailleurs, la structure du boîtier ainsi proposé facilite largement l'assemblage du dispositif d'affichage.

Selon l'invention, l'assemblage du réseau de bandes électriquement conductrices et du panneau électriquement isolant peut être réalisé soit par soudure aux ultra-sons, bouterollage, simple collage, ou encore par surmoulage du matériau électriquement isolant sur les bandes.

Selon une caractéristique avantageuse de l'invention, le panneau peut être plié le long de deux lignes parallèles délimitant deux parois latérales de part et d'autre d'une paroi de base.

Lesdites parois latérales parallèles possèdent de préférence sur leur surface en regard des rainures aptes à recevoir l'afficheur. Cette caractéristique élimine la nécessité de prévoir des structures complexes pour supporter l'afficheur et facilite également dans une large mesure l'assemblage du dispositif d'affichage.

Selon la présente invention, les bandes en matériau électriquement conducteur portées par le panneau font de préférence saillie à l'intérieur des rainures prévues dans les parois latérales pour venir en appui contre les contacts de l'afficheur engagé dans ces rainures.

Là encore, une telle caractéristique permet un assemblage simple et rapide du dispositif d'affichage et garantit à la fois un support élastique particulièrement appréciable pour l'afficheur et une connexion électrique parfaitement fiable.

On rappelle que, d'une façon générale, les afficheurs statiques type écran plat, en particulier les afficheurs à cristaux liquides sont formés d'au moins deux plaques transparentes parallèles, le plus souvent en verre, scellées sur leur pourtour, qui comportent sur leur surface interne en regard des électrodes et entre lesquelles est disposé un matériau électro-optique apte à changer d'état pour émettre un signal optique en fonction du signal électrique appliqué aux bornes des électrodes précitées.

De tels écrans plats comprenant deux plaques parallèles en verre logeant le matériau électro-optique sont fragiles.

En particulier, on n'a pas su jusqu'ici opérer de façon satisfaisante, c'est-à-dire de façon fiable et économique, le support élastique des afficheurs statiques type écran plat, sans sollicitation excessive sur les plaques en verre de ceux-ci, accompagné d'une liaison électrique correcte et parfaitement fiable.

Ces difficultés ont amené la conception de connecteurs en caoutchouc silicone formés d'un empilement alterné de couches conductrices et non conductrices commercialisés généralement sous la dénomination « ZEBRA ». De tels dispositifs sont néanmoins relativement coûteux.

Selon un mode de réalisation, la présente invention vient résoudre le problème ainsi posé grâce à l'engagement de l'afficheur dans les rainures des parois latérales du boîtier, au niveau desquelles font saillie les bandes en matériau électriquement conducteur, en particulier lorsque celles-ci présentent des cambrures au niveau desdites rainures.

Ces cambrures permettent en effet à la fois un support élastique de l'afficheur et une liaison électrique parfaitement fiable.

Selon une autre caractéristique avantageuse de la présente invention, le panneau peut comprendre de plus une languette équipée de bandes électriquement conductrices adaptées pour être reliées à l'utilisation avec des moyens d'alimentation électrique externes, et reliée au corps principal du panneau par deux lignes de pliage parallèles de telle sorte que après pliage autour de celles-ci, la languette s'étende sensiblement perpendiculairement au fond du boîtier, en retrait du contour de celui-ci.

Comme on l'expliquera plus en détail par la suite, cette caractéristique permet notamment de limiter l'encombrement du dispositif d'affichage conforme à la présente invention.

Selon une autre caractéristique importante de la présente invention, l'une des parois du boîtier peut supporter un circuit pilote de l'afficheur relié aux bandes en matériau électriquement conducteur. Cette disposition permet d'éviter l'emploi de circuit imprimé à l'intérieur du dispositif d'affichage.

Selon une autre caractéristique avantageuse de l'invention, l'une des parois du boîtier peut supporter des composants discrets, tels que résistance et quartz, aptes à coopérer avec le circuit pilote.

La paroi de base du boîtier peut supporter de plus avantageusement une source lumineuse.

Plus précisément, selon la présente invention, la paroi de base est de préférence adaptée pour recevoir la source lumineuse selon un montage à baïonnette, ou autres, tel que soudure à la vague.

Selon un mode de réalisation considéré actuellement comme préférentiel, les parois latérales du boîtier possèdent sur leur surface en regard des structures formant réflecteur, par exemple de section parabolique, aptes à diriger vers l'afficheur la lumière qu'elles reçoivent de la source lumineuse.

Selon une autre caractéristique avantageuse de l'invention, au moins un volet peut être articulé sur une paroi latérale du boîtier et recevoir un bouton poussoir de commande du dispositif.

Plus précisément encore, selon la présente invention, le volet précité est de préférence relié à la paroi latérale du boîtier par l'intermédiaire de trois lignes de pliage parallèles.

Chaque volet peut en outre être supporté par des équerres solidaires des parois latérales.

Selon une caractéristique importante de la présente invention, les lignes de pliage peuvent avantageusement être formées de rétrécissements biseautés dans le panneau.

Les charnières de pliage prévues entre les différents éléments composant le panneau peuvent avantageusement être formées selon la présente invention par les bandes en matériau électriquement conducteur.

Les caractéristiques et avantages de la présente invention apparaîtront mieux à la lecture de la description détaillée qui va suivre, relative à un mode de réalisation préférentiel conforme à la présente invention, et en regard des dessins annexés, donnés à titre d'exemple non limitatif, et sur lesquels :

la figure 1 représente une vue générale en perspective d'un dispositif d'affichage conforme à la présente invention, l'afficheur plan ayant été retiré à des fins de clarté,

la figure 2 représente une vue schématique en dimensions réduites, du même dispositif, équipé de l'afficheur,

la figure 3 représente une vue schématique des parties principales du panneau composant le boîtier, avant pliage,

la figure 4 représente une vue de face avant du dispositif d'affichage selon un angle de vue référencé IV sur la figure 1,

la figure 5 représente une vue latérale du même dispositif selon un angle de vue référencé V sur la figure 1,

la figure 6 représente une vue de dessus du même dispositif, selon un angle de vue référencé VI sur la figure 1,

la figure 7 représente une vue latérale du même dispositif, selon un angle de vue référencé VII sur la figure 1,

les figures 8, 9 et 10 représentent des vues similaires aux figures 4, 5 et 6 précitées, respectivement, sur lesquelles néanmoins on a dessiné en pointillés et de façon schématique, les bandes électriquement conductrices portées par le panneau composant le boîtier,

la figure 11 illustre un détail de réalisation du boîtier,

la figure 12 représente un détail de réalisation de la figure 9 identifié par la référence XII sur celle-ci et illustre plus précisément la réalisation des charnières entre les différents éléments du panneau,

la figure 13 représente une vue de dessus du panneau avant pliage selon un angle de vue référencé XIII sur la figure 3, et

la figure 14 représente une vue latérale du panneau avant pliage selon un angle de vue référencé XIV sur la figure 3,

la figure 15 illustre schématiquement la fixation d'un composant discret sur le panneau composant le boîtier du dispositif d'affichage conforme à la présente invention, et

la figure 16 illustre l'engagement d'un afficheur dans des rainures réalisées dans les panneaux latéraux du boîtier, et la connexion électrique entre l'afficheur et les bandes électriquement conductrices.

Pour l'essentiel, le panneau 1 représenté sur les figures comprend une pluralité d'éléments généralement plans et reliés entre eux par des lignes de pliage.

Plus précisément, le panneau 1 comprend pour l'essentiel une paroi de base 10 qui, à l'utilisation, forme le fond du boîtier, deux parois latérales 20, 30 raccordées respectivement de part et d'autre de la paroi de base 10, une languette de connexion 40 raccordée par un élément intermédiaire 50 à la paroi de base 10 transversalement aux parois latérales 20, 30 et des volets 60, 70 articulés sur l'une des parois latérales 30.

La paroi de base 10 présente un contour généralement rectangulaire.

Les parois latérales 20, 30 sont raccordées respectivement sur le grand côté de la paroi de base 10 autour des lignes de pliage parallèles référencées 21, 31 sur les figures.

L'élément intermédiaire 50 est raccordé sur un petit côté de la paroi de base 10 au niveau d'une ligne de pliage 51 orthogonale aux lignes de pliage 21, 31 précitées.

La languette de connexion 40 est reliée sur l'élément intermédiaire 50 par l'intermédiaire d'une ligne de pliage 41 parallèle à la ligne de pliage 51 précitée.

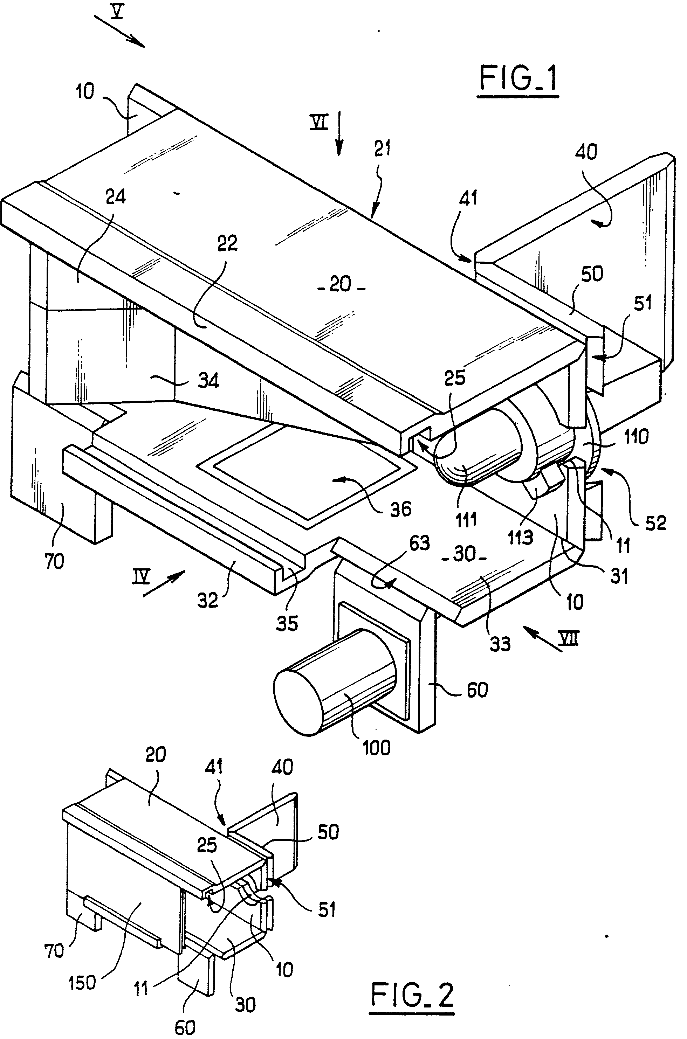

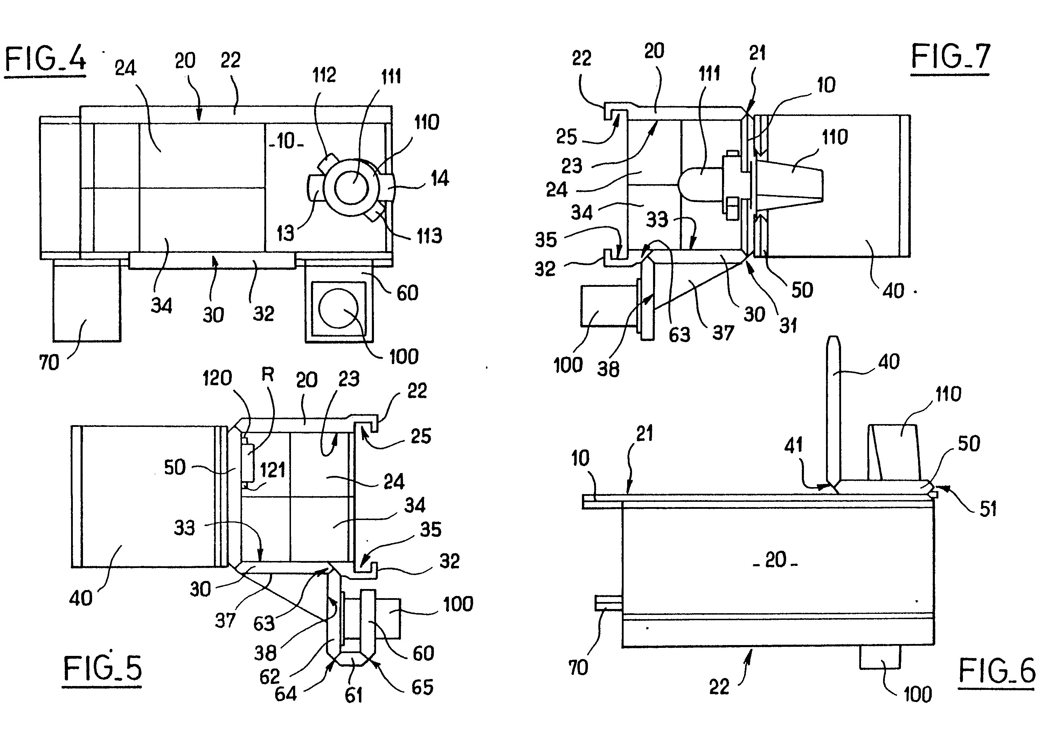

Comme cela apparaît à l'examen des figures 1 et 5, les volets 60, 70 sont articulés sur l'une des parois latérales 30 par l'intermédiaire de lignes de pliage parallèles aux lignes de pliage 21, 31 précitées.

Selon un mode de réalisation considéré actuellement comme préférentiel, les volets 60, 70, comme cela est représenté en particulier sur la figure 5, sont reliés à l'une des parois latérales 30 par l'intermédiaire de deux volets intermédiaires référencés 61, 62 sur la figure 5, et trois lignes de pliage référencées 63, 64 et 65 sur cette même figure 5.

Les lignes de pliage 63, 64 et 65 et les dimensions des volets intermédiaires 61, 62 sont déterminées de telle sorte que à l'utilisation, le volet intermédiaire 62, adjacent à la paroi latérale 30 s'étend perpendiculairement à celle-ci et le volet 60, 70 supportant le bouton poussoir 100 schématiquement représenté sur les figures soit retourné sur le volet intermédiaire 62 précité parallèlement à celui-ci.

Plus précisément, le premier volet intermédiaire 62 est relié à la paroi latérale 30 autour d'une ligne de pliage 63 parallèle aux lignes de pliage 21 et 31 précitées, au niveau du bord libre 32 de la paroi latérale 30 opposé à la ligne de pliage 31.

Comme cela est représenté sur la figure 1, les volets intermédiaires tels que le volet intermédiaire 62 qui raccorde le volet 60, 70 à la paroi latérale 30 sont disposés sur les extrémités du bord libre précité 32 de la paroi latérale 30 opposé à la ligne de pliage 31. Plus précisément, comme cela apparaît à l'examen de la figure 1, de préférence la ligne de pliage 63 raccordant le volet intermédiaire 62 à la paroi latérale 30 est ménagée en retrait du bord libre 32 de la paroi latérale 30 opposé à la ligne de pliage 31.

Le second volet intermédiaire 61 est raccordé au premier volet intermédiaire 62 par la ligne de pliage 64.

Le volet 60 supportant le bouton poussoir 100 est relié au second volet intermédiaire 61 par la ligne de pliage 65.

Comme illustré sur la figure 7, en variante, les volets 60, 70 peuvent être articulés directement sur la paroi latérale 30 autour de la ligne de pliage 63.

Les parois latérales 20,30 sont munies chacune, au voisinage de leurs bords libres 22, 32 parallèles et opposés aux lignes de pliage 21, 31, et sur une surface commune formant à l'utilisation la surface interne 23, 33 du boîtier, d'une rainure rectiligne 25, 35 s'étendant parallèlement aux lignes de pliage 21, 31.

La distance séparant le fond des rainures 25, 35 est légèrement supérieure à la largeur de l'afficheur.

L'élément de base 10 possède en position adjacente à l'une de ses extrémités et à mi-distance des parois latérales 20, 30 une ouverture 11 en forme générale de trou de serrure.

Plus précisément, l'ouverture 11 est formée d'un orifice circulaire central 12 dans lequel débouchent des ouvertures généralement rectangulaires 13, 14 diamétralement opposées.

Cette ouverture 11 est adaptée pour recevoir selon un montage du type à baïonnette un culot 110 support de source lumineuse 111 du type lampe à filament ou diode électroluminescente.

La languette intermédiaire 50 reliant la languette de connexion 40 et l'élément de base 10 est également munie d'une ouverture 52 adjacente à l'ouverture 11 et permettant le passage du culot 110 précité.

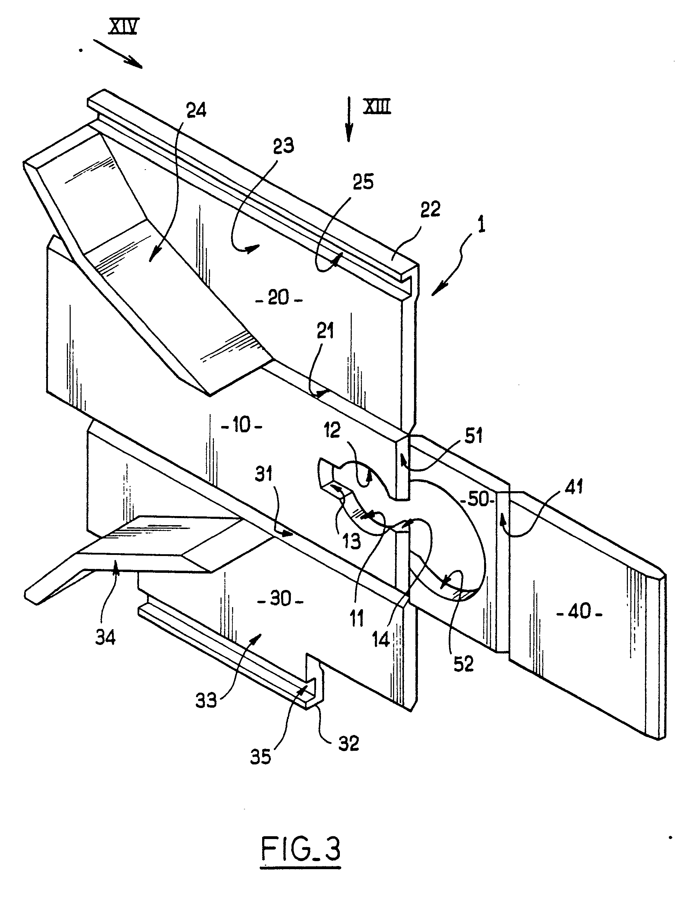

Selon l'illustration de la figure 3, l'ouverture 52 est généralement circulaire et présente un diamètre supérieur au diamètre de l'orifice central 12 de l'ouverture précitée 11. Ce mode de réalisation ne doit cependant pas être considéré comme limitatif.

Selon l'exemple représenté sur la figure 2, l'ouverture 52 présente une géométrie similaire à l'ouverture 11 précitée.

De préférence, les parois latérales 20, 30 sont munies sur leur surface interne 23, 33 de structures 24, 34 formant réflecteur aptes à renvoyer vers le dispositif d'affichage 150 la lumière qu'elles reçoivent émise par la source lumineuse 111.

Le réflecteur précité coopérant avec la source lumineuse 111 est avantageusement réalisé sous forme de deux éléments 24, 34 solidaires respectivement de la surface interne 23, 33 et s'étendant perpendiculairement à celle-ci. Après pliage des parois latérales 20, 30 autour des lignes de pliage 21, 31 perpendiculairement à la paroi de base 10, les structures 24, 34 se raccordent selon un plan médian parallèle aux parois latérales 20, 30 et équidistant de celle-ci.

De préférence, bien que les structures 24, 34 soient schématiquement représentées sur les figures sous forme de deux pans inclinés, de préférence, les structures 24, 34 forment un réflecteur d'allure parabolique dans un plan parallèle aux parois latérales 20, 30.

Selon l'invention, les lignes de pliage 21, 31, 41, 51, 63, 64 et 65 sont formées de rétrécissements dans l'épaisseur du panneau 1.

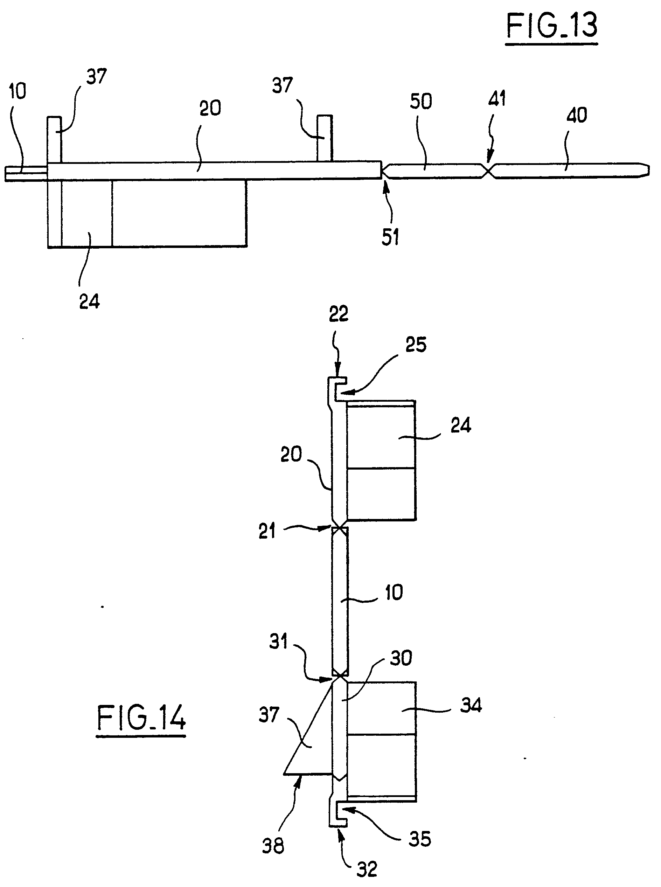

Plus précisément, comme cela est illustré par exemple sur la figure 12, chacun des rétrécissements est formé de deux paires de surfaces biseautés 25, 26 d'une part, 15, 16 d'autre part s'étendant à partir de surfaces opposées des éléments adjacents du panneau 10 (par exemple les éléments 10 et 20) et convergent vers la ligne de pliage.

Le cas échéant, les paires de surfaces 25, 26 et 15, 16 précitées peuvent être tronquées par les surfaces illustrées schématiquement 17, 27 sur la figure 12 et s'étendant perpendiculairement aux surfaces principales des éléments du panneau 1.

De préférence, les surfaces biseautées 25, 26 et 15, 16 précitées sont inclinées d'environ 45° sur les surfaces principales des éléments du panneau 1.

Selon un mode de réalisation considéré actuellement comme préférentiel, le panneau 1 est réalisé par surmoulage de matière plastique, par exemple un polyamide, sur un réseau de bandes électriquement conductrices 200.

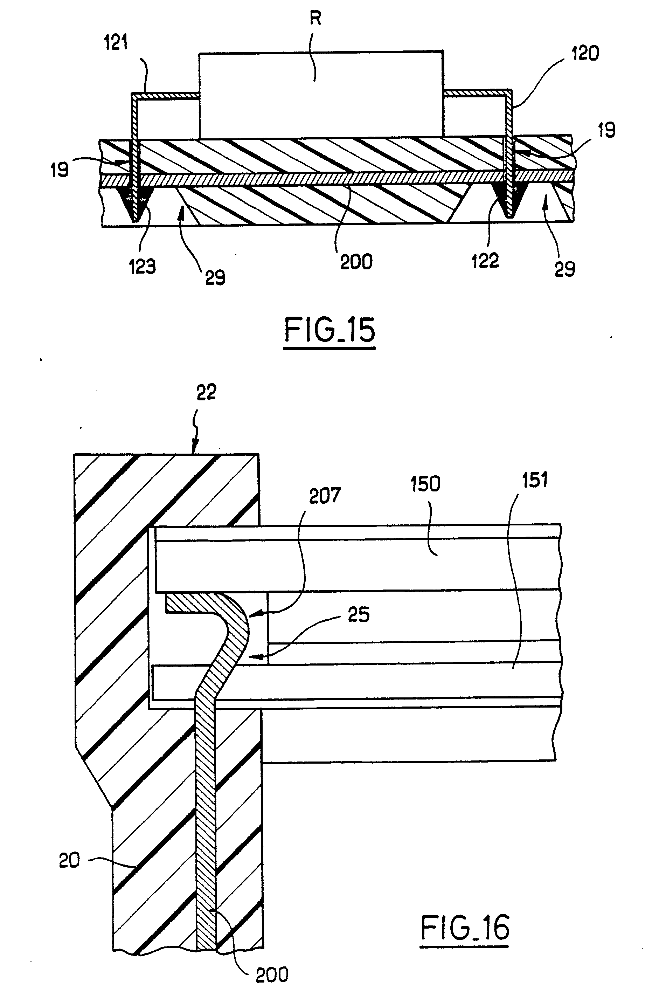

Ainsi, comme cela apparaît à l'examen des figures 12, 15, le réseau de bandes électriquement conductrices 200 est noyé dans la masse du panneau 1, sensiblement à mi-épaisseur de celui-ci.

Les bandes 200 précitées qui, d'une façon générale, s'étendent transversalement aux lignes de pliage 21, 31, 41, 51, 63, 64 et 65 constituent les charnières d'articulation des différents éléments du panneau 1 au niveau des lignes de pliage précitées.

Néanmoins, les bandes électriquement conductrices 200 sont accessibles à la surface du panneau 1 en différentes zones de celui-ci.

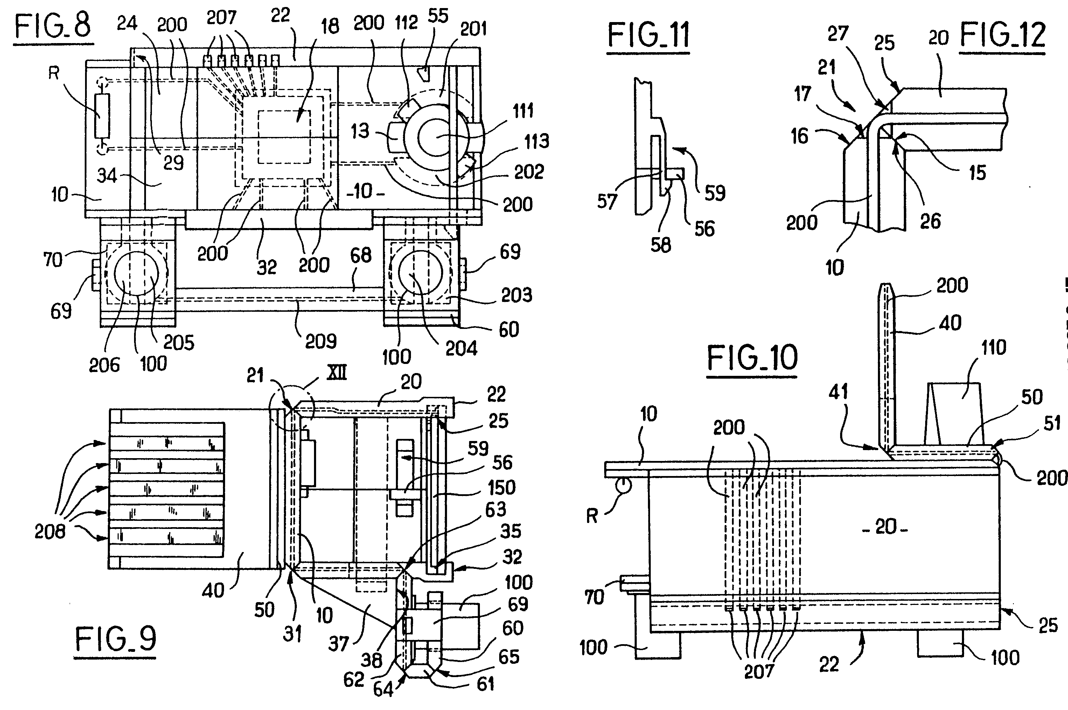

Cela est en particulier le cas au niveau de la languette de connexion 40, comme illustré sur la figure 9, sur la périphérie de l'ouverture 11 pour l'alimentation de la source lumineuse 111, au niveau des volets 60, 70 pour coopérer avec les boutons poussoirs 100, au niveau des rainures 23, 33 pour l'interconnexion avec l'afficheur et enfin, au niveau de la paroi de base 10 ou de l'une au moins des parois latérales 20, 30 pour être reliée de préférence à un circuit pilote de l'afficheur et, le cas échéant, aux composants discrets tels qu'illustrés par exemple sur les figures 8 et 15.

En effet, selon une caractéristique importante de la présente invention, l'un des éléments du panneau 1 supporte un circuit pilote de l'afficheur, c'est-à-dire le circuit générant les tensions de commande de celui-ci. Le circuit pilote est raccordé à l'afficheur et aux moyens d'alimentation externes par l'intermédiaire des bandes électriquement conductrices 200.

Le circuit pilote précité peut être fixé sur une plage de la surface interne 33 d'une paroi latérale 30 telle que schématisée en 36 sur la figure 1.

Le circuit pilote peut encore être immobilisé sur une plage de la surface interne de la paroi de base 10 tel qu'illustré schématiquement sous la référence 18 ,sur la figure 8.

Diverses techniques classiques en soi peuvent être retenues pour relier les bornes du circuit pilote formé d'une pastille de circuit intégré aux bandes électriquement conductrices 200.

Une première technique d'implantation et de raccordement de la pastille du circuit intégré pilote consiste à coller cette pastille sur les plages 18 ou 36 précitées, puis de relier les extrémités des bandes électriquement conductrices 200 accessibles à ce niveau par l'intermédiaire de fils électriquement conducteurs selon la technique classique dite de « bonding ».

Plus précisément, la pastille de circuit intégré peut être reliée aux bandes 200 par l'intermédiaire de fils d'or selon la technique de « ball bonding » ou à l'aide de fils d'aluminium selon la technique de « Wedge bonding ».

Selon une seconde technique de raccordement, les bornes de contact de la pastille disposées sur une surface principale de celle-ci sont revêtues d'une couche d'étamage à base d'étain et/ou de plomb. De façon correspondante, les extrémités des bandes sont pourvues d'un traitement constitué par un dépôt d'or, de nickel ou de SnPb. De plus, la géométrie des extrémités des bandes électriquement conductrices 200 est adaptée de telle sorte que celles-ci soient disposées en regard des bornes de la pastille de circuit intégré.

Il suffit alors de disposer le circuit intégré en vis-à-vis de la zone d'implantation, les bornes de la pastille étant en regard respectivement des extrémités des bandes électriquement conductrices et d'assurer une soudure par refusion des zones d'étamage précitées pour raccorder la pastille du circuit imprimé aux bandes électriquement conductrices.

Le circuit pilote est généralement associé à des composants discrets, tels qu'un quartz ou des résistances schématisé(es) sous la référence R sur les figures.

De préférence, ces composants R sont supportés par la paroi de base 10 en arrière des structures 24, 34 formant réflecteur, soit à l'opposé de la source lumineuse 111 par rapport à ces structures.

Pour recevoir ces composants discrets, les éléments du panneau 1 sont munis, sur une face, d'ouvertures référencées 29 sur la figure 15, par exemple tronconiques, permettant d'accéder aux bandes électriquement conductrices 200 logées à mi-épaisseur dans les éléments du panneau.

Sur l'autre face, les éléments sont munis d'un alésage 19 de plus faible section, qui traverse par ailleurs les bandes électriquement conductrices 200 et débouche dans les ouvertures 29 précitées.

Lors de l'assemblage, les pattes 120, 121 des composants R, telles qu'illustrées sur la figure 15, sont engagées dans les alésages 19, traversent les bandes électriquement conductrices 200 et émergent dans les ouvertures 29.

L'ensemble ainsi préparé peut alors être soumis à un processus de soudure à la vague permettant de relier électriquement les pattes 120, 121 des composants discrets aux bandes électriquement conductrices 200, comme cela est illustré schématiquement en 122, 123 sur la figure 15.

Comme cela apparaît à l'examen de la figure 8, deux bandes électriquement conductrices 200 prévues sur la paroi de base 10 se terminent, sur la périphérie de l'ouverture 11 recevant la source lumineuse, sous forme de plages 201, 202 diamétralement opposées, en forme de section de couronne, et accessibles sur une face de la paroi de base 10 pour être raccordées à des plots de contact 112, 113 portés par le culot 110 en vue de l'alimentation de la source lumineuse 111.

De façon similaire, des bandes électriquement conductrices 200 s'étendent dans la paroi latérale 30 et les volets 62, ou 60 et 70 et se terminent respectivement, sous forme d'une paire de plages de contact évasées 203, 204 d'une part, 205, 206 d'autre part, accessibles sur l'extérieur.

Les plages 203, 204, 205 et 206 présentent par exemple un contour rectangulaire.

Au repos, les paires de plages 203, 204 d'une part et 205, 206 d'autre part sont séparées électriquement. Néanmoins, les paires de plages précitées 203, 204 d'une part, 205, 206 d'autre part sont susceptibles d'être court-circuitées par les boutons poussoirs 100 précités, afin d'assurer, de façon classique en soi, une commande externe des circuits pilotes, par exemple une remise à l'heure (heure et minutes) dans le cas d'une montre digitale, ou un appel fonction.

Pour ce faire, chacun des boutons poussoirs 100 peut par exemple être formé d'un manchon élastique en matériau élastomère électriquement isolant qui loge un noyau électriquement conducteur apte à être porté au contact des plages 203, 204 ou 205 et 206 pour relier celles-ci lors de l'enfoncement du bouton poussoir associé.

A l'utilisation, les afficheurs 150 sont engagés dans les rainures 25, 35 des parois latérales 20, 30, comme illustré schématiquement sur la figure 2. Par ailleurs, comme cela est illustré notamment sur la figure 16, les bandes électriquement conductrices 200 destinées à être reliées aux électrodes de contact de l'afficheur font saillie à l'intérieur des rainures 25, 35 pour venir en appui contre les contacts précités.

Plus précisément encore, comme cela apparaît à l'examen de la figure 16, de préférence, les contacts électriques établis entre les dispositifs d'affichage 150 et les extrémités des bandes électriquement conductrices 200, au niveau des rainures 25, 35 sont des contacts élastiques dus à des cambrures 207 réalisées dans lesdites bandes 200.

L'établissement des contacts entre l'afficheur 150 et le circuit pilote et le circuit d'alimentation électrique, par l'intermédiaire de cambrures élastiques 207 prévues sur les bandes électriquement conductrices 200 permet de garantir une interconnexion fiable avec l'afficheur 150 et d'opérer une immobilisation ferme et précise de celui-ci, sans sollicitation excessive sur les plaques en verre de l'afficheur.

Un mode de réalisation des cambrures 207 est illustré sur la figure 16. Ce mode de réalisation, donné à titre d'illustration, ne doit cependant pas être considéré comme limitatif.

Selon l'illustration de la figure 16, chaque cambrure 207 est formée d'une courbure en arc généralement hémicirculaire convexe vers l'extérieur en direction de l'afficheur 150.

Comme cela apparaît notamment à l'examen de la figure 9, certaines des bandes électriquement conductrices 200 sont de plus accessibles sur l'extérieur de la languette de connexion 40.

Plus précisément, au niveau de cette languette de connexion 40, les bandes électriquement conductrices 200 sont accessibles sous forme d'une pluralité de pistes 208 parallèles entre elles et transversales aux lignes de pliage 41, 51 pour être enfichées dans un connecteur complémentaire en vue d'un raccordement à des moyens d'alimentation extérieurs, pour l'alimentation du circuit pilote, de l'afficheur 150 et de la source lumineuse 111, par l'intermédiaire des bandes électriquement conductrices 200 lors d'un engagement par translation perpendiculaire à la surface de base 10.

Comme cela est illustré sur la figure 16, l'afficheur 150 peut être revêtu d'un filtre coloré 151 engagé également par ses bords latéraux longitudinaux dans les rainures 25, 35.

Le cas échéant, les rainures 25, 35 peuvent être munies de butées imposant un positionnement axial correct de l'afficheur et une connexion fiable et précise avec les cambrures 207 des bandes électriquement conductrices 200.

On a ainsi représenté schématiquement sur la figure 8, une butée 29 prévue à l'une des extrémités de la rainure 25 et une languette élastique 55 en saillie sur le fond de la rainure 25 à l'autre extrémité de celle-ci pour solliciter l'afficheur 150 contre la butée axiale 29 précitée, afin de garantira un positionnement précis de l'afficheur et garantir une connexion correcte.

De préférence, comme cela est illustré sur les figures 5 et 7, les volets 60 ou 62 sont supportés par des équerres 37 solidaires de la face extérieure de la paroi latérale 30.

Plus précisément, les volets 60, 62 viennent en appui après pliage autour de la ligne 63 contre une surface 38 des équerres 37 s'étendant transversalement à la surface extérieure de la paroi latérale 30 et parallèlement à la ligne de pliage 63.

Les divers éléments du panneau 1 peuvent en outre être munis de structures d'encliquetage pour permettre l'immobilisation du boîtier sur une embase, par exemple sur un tableau de bord de véhicule automobile dans le cas de la réalisation d'une montre digitale.

On va maintenant décrire le processus d'assemblage du dispositif d'affichage conforme à la présente invention.

Il convient dans un premier temps de réaliser le panneau 1 précédemment décrit composé de la paroi de base 10 munie de l'ouverture 11, des parois latérales 20, 30 munies des structures 24, 34 et des rainures 25, 35 des éléments 40, 50 et des volets 60, 70, tous ces éléments étant raccordés par des lignes de pliage 21, 31, 41, 51 et 63, 64 et 65 précitées.

Les parois latérales 20, 30 sont alors rabattues en position parallèle, d'un même côté de la paroi de base 10 par pliage autour des lignes 21 et 31, et l'afficheur 150 est engagé dans les rainures 25, 35.

Les structures 24, 34 formant réflecteur se raccordent alors selon un plan médian parallèle aux parois latérales 20, 30.

De préférence, les parois latérales 20, 30 sont maintenues dans cette position repliée, orthogonales à la paroi de base 10 grâce à des structures d'encliquetage, par exemple tel que représenté figure 11.

Sur celle-ci, on aperçoit une languette élastique 59 possédant en extrémité une protubérance 58, réalisée en saillie sur la paroi latérale 20, par exemple sur l'arrière de la structure 24 et engagée lors de l'opération de pliage dans une ouverture 57 ménagée dans une saillie 56 solidaire de l'autre paroi latérale 30.

La languette intermédiaire 50 est rabattue contre la paroi de base 10, à l'opposé des parois latérales 20, 30 par pliage autour de la ligne 51. L'ouverture 52 est alors disposée en regard de l'ouverture 11.

Enfin, la languette de connexion 40 est rabattue perpendiculairement à la paroi de base 10 par pliage autour de la ligne 41.

Dans cette position, on remarquera que la languette de connexion 40 est disposée à une distance du bord libre transversal de la paroi de base 10 égale à la largeur de la languette intermédiaire 50.

Cette disposition permet en particulier de limiter l'encombrement du dispositif d'affichage conforme à la présente invention.

Il suffit alors d'engager le culot 110 support de source lumineuse dans l'ouverture 11 et le poussoir 100 sur les volets 60, 70 et de raccorder le circuit pilote et les composants discrets aux bandes électriquement conductrices 200 pour disposer d'un dispositif d'affichage fonctionnel et prêt à être testé.

De préférence, les volets 60, 62 sont maintenus en position repliée parallèle tels qu'illustrés sur la figure 9 grâce à des moyens d'encliquetage illustrés schématiquement sous la référence 69 sur la figure 9 et similaires, au niveau du principe, aux moyens d'encliquetage illustrés sur la figure 11.

Comme on l'a représenté sur la figure 8, dans le cas où certaines des pistes conductrices prévues au niveau des volets 60, 70 doivent être interconnectées, on peut prévoir, comme illustré sur la figure 8, un pontet 68 reliant les volets 60 et 70 et venu de moulage avec ceux-ci portant une piste 209 reliant les pistes en question des volets.

**Revendications**

1. Dispositif d'affichage comportant un afficheur statique (150) type écran plat, tel qu'un afficheur à cristaux liquides, caractérisé par le fait qu'il comprend un boîtier support d'afficheur formé par pliage d'un panneau (1) en matériau électriquement isolant muni d'une série de bandes (200) en matériau électriquement conducteur aptes à relier l'afficheur (150) et des moyens d'alimentation électrique de celui-ci.

2. Dispositif d'affichage selon la revendication 1, caractérisé par le fait que l'assemblage du réseau de bandes (200) électriquement conductrices et du panneau (1) en matériau isolant est réalisé par soudure au ultra-sons ou bouterollage ou simple collage ou surmoulage de matière plastique sur le réseau de bandes (200).

3. Dispositif d'affichage selon l'une des revendications 1 ou 2, caractérisé par le fait que le panneau (1) est plié le long de deux lignes parallèles (21, 31) délimitant deux parois latérales (20, 30) de part et d'autre d'une paroi de base (10).

4. Dispositif d'affichage selon la revendication 3, caractérisé par le fait que les parois latérales (20, 30) possèdent sur leur surface en regard des rainures (25, 35) aptes à recevoir l'afficheur (150).

5. Dispositif d'affichage selon la revendication 4, caractérisé par le fait que les bandes (200) en matériau électriquement conducteur font saillie à l'intérieur des rainures (25, 35) prévues dans les parois latérales (20, 30) pour venir en appui contre les contacts de l'afficheur (150) engagés dans ces rainures.

6. Dispositif d'affichage selon la revendication 5, caractérisé par le fait que les bandes (200) en matériau électriquement conducteur présentent des cambrures (207) au niveau desdites rainures (25, 35).

7. Dispositif d'affichage selon l'une des revendications 1 à 6, caractérisé par le fait que le panneau (1) comprend de plus une languette (40) équipée de bandes électriquement conductrices parallèles (208) adaptées pour être reliées à l'utilisation avec des moyens d'alimentation électrique externes, et reliée au corps principal (10) du panneau (1) par deux lignes de pliage parallèles (41, 51) de telle sorte que, après pliage autour de celles-ci, la languette (40) s'étend sensiblement perpendiculairement au fond (10) du boîtier, en retrait du contour de celui-ci.

8. Dispositif d'affichage selon l'une des revendications 1 à 7, caractérisé par le fait que l'une des parois (10, 20) du boîtier supporte un circuit de commande de l'afficheur (150) relié aux bandes (200) en matériau électriquement conducteur.

9. Dispositif d'affichage selon la revendication 8, caractérisé par le fait que l'une des parois (10, 20, 30) du boîtier supporte des composants discrets (R) aptes à coopérer avec le circuit pilote.

10. Dispositif d'affichage selon l'une des revendications 1 à 9, caractérisé par le fait qu'une paroi de base (10) du boîtier supporte une source lumineuse (111).

11. Dispositif d'affichage selon la revendication 10, caractérisé par le fait que la paroi de base (10) est adaptée pour recevoir la source lumineuse (111) selon un montage à baïonnette.

12. Dispositif d'affichage selon l'une des revendications 10 ou 11, caractérisé par le fait que les parois latérales (20, 30) du boîtier possèdent sur leur surface en regard (23, 33) des structures (24, 34) formant réflecteur apte à diriger vers l'afficheur (150) la lumière qu'il reçoit issue de la source lumineuse (111).

13. Dispositif d'affichage selon la revendication 12, caractérisé par le fait que lesdites structures (24, 34) formant réflecteur, définissent un réflecteur d'allure parabolique, ou paraboloïdale.

14. Dispositif d'affichage selon l'une des revendications 1 à 13, caractérisé par le fait que au moins un volet (60, 70) articulé sur une paroi latérale (20, 30) du boîtier reçoit un bouton pressoir (100) de commande du dispositif.

15. Dispositif d'affichage selon la revendication 14, caractérisé par le fait que chaque volet (60, 70) est relié à la paroi latérale (20, 30) du boîtier par l'intermédiaire de trois lignes de pliage (63, 64, 65).

16. Dispositif d'affichage selon l'une des revendications 14 ou 15, caractérisé par le fait que chaque volet (60, 70) est supporté par des équerres (37) solidaires des parois latérales (20, 30) du boîtier.

17. Dispositif d'affichage selon l'une des revendications 1 à 16, caractérisé par le fait que les lignes de pliage (21, 31, 41, 51) sont formées de rétrécissements biseautés dans le panneau (1).

18. Dispositif d'affichage selon l'une des revendications 1 à 17, caractérisé par le fait que les charnières de pliage entre les différents éléments du panneau sont formées par les bandes (200) en matériau électriquement conducteur.

## Claims

1. Display device having a static flat-screen-type display (150), such as a liquid-crystal display, characterized in that it comprises a display support casing formed by folding a panel (1) of electrically insulating material provided with a series of strips (200) of electrically conductive material suitable for connecting the display (150) and electrical supply means for the latter.

2. Display device according to Claim 1, characterized in that the network of electrically conductive strips (200) and the panel (1) of insulating material are assembled by ultrasonic sealing or snapping or simply sticking or overmoulding plastics material onto the network of strips (200).

3. Display device according to either of Claims 1 or 2, characterized in that the panel (1) is folded along two parallel lines (21, 31) delimiting two side walls (20, 30) on either side of a base wall (10).

4. Display device according to Claim 3, characterized in that the side walls (20, 30) have on their surfaces facing one another grooves (25, 35) suitable for receiving the display (150).

5. Display device according to Claim 4, characterized in that the strips (200) of electrically conductive material project inside the grooves (25, 35) provided in the side walls (20, 30) so as to abut agains the contacts of the display (150), which engage in these grooves.

6. Display device according to Claim 5, characterized in that the strips (200) of electrically conductive material have curves (207) at the level of the said grooves (25, 35).

7. Display device according to one of Claims 1 to 6, characterized in that the panel (1) furthermore comprises a tongue (40) provided with parallel electrically conductive strips (208) suitable for being connected in use to external electrical supply means, this tongue (40) being connected to the main body (10) of the panel (1) via two parallel fold lines (41, 51) such that after being folded around the latter the tongue (40) extends substantially perpendicular to the base (10) of the casing, set back from the outline of the latter.

8. Display device according to one of Claims 1 to 7, characterized in that one of the walls (10, 20) of the casing carries a display (150) control circuit connected to the strips (200) of electrically conductive material.

9. Display device according to Claim 8, characterized in that one of the walls (10, 20, 30) of the casing carries separate components (R) suitable for cooperating with the pilot circuit.

10. Display device according to one of Claims 1 to 9, characterized in that a base wall (10) of the casing carries a light source (111).

11. Display device according to Claim 10, characterized in that the base wall (10) is suitable for receiving the light source (111) in a bayonet mounting.

12. Display device according to either of Claims 10 or 11, characterized in that the side walls (20, 30) of the casing have on their surfaces facing one another (23, 33) structures (24, 34) forming a reflector suitable for directing towards the display (150) the light which it receives from the light source (111).

13. Display device according to Claim 12, characterized in that the said structures (24, 34) forming a reflector define a reflector of parabolic or paraboloidal shape.

14. Display device according to one of Claims 1 to 13, characterized in that at least one flap (60, 70) articulated with a side wall (20, 30) of the casing has a push button (100) for controlling the device.

15. Display device according to Claim 14, characterized in that each flap (60, 70) is connected to the side wall (20, 30) of the casing by means of three fold lines (63, 64, 65).

16. Display device according to either of Claims 14 or 15, characterized in that each flap (60, 70) is supported by angle pieces (37) integral with the side walls (20, 30) of the casing.

17. Display device according to one of Claims 1 to 16, characterized in that the fold lines (21, 31, 41, 51) are formed by bevelled narrowed parts in the panel (1).

18. Display device according to one of Claims 1 to 17, characterized in that the fold hinges between the various elements of the panel are formed by the strips (200) of electrically conductive material.

## Patentansprüche

1. Anzeigevorrichtung mit einer statischen Anzeigeeinrichtung (150) des flachen Bildschirmtyps, z. B. einer Flüssigkristallanzeige, dadurch gekennzeichnet, daß sie ein Trägergehäuse für die Anzeigeeinrichtung aufweist, das durch Falten einer Platte (1) aus elektrisch isolierendem Material geformt ist, die mit einer Reihe von Bahnen (200) aus elektrisch leitendem Material zur elektrischen Verbindung der Anzeigeeinrichtung (150) zusammen mit Mitteln zur elektrischen Stromversorgung versehen ist.

2. Anzeigevorrichtung nach Anspruch 1, dadurch gekennzeichnet, daß die Verbindung des Netzes von elektrischen Leiterbahnen (200) mit der Platte (1) aus isolierendem Material mittels Ultraschallverschweißung, Vernietung, einfacher Klebung oder durch Umhüllung des Leiterplattennetzes (200) mit Kunststoffmaterial erzeugt ist.

3. Anzeigevorrichtung nach Anspruch 1 oder 2, dadurch gekennzeichnet, daß die Platte (1) entlang von zwei parallelen Linien (21, 31) gefaltet ist, welche zwei Seitenwände (20, 30) beiderseits einer Bodenwand (10) begrenzen.

4. Anzeigevorrichtung nach Anspruch 3, dadurch gekennzeichnet, daß die Seitenwände (20, 30) auf ihrer jeweils gegenüberstehenden Oberfläche Nuten (25, 35) aufweisen, welche zur Aufnahme der Anzeigeeinrichtung (150) geeignet sind.

5. Anzeigevorrichtung nach Anspruch 4, dadurch gekennzeichnet, daß die Bahnen (200) aus elektrisch leitendem Material im Inneren der in den Seitenwänden (20, 30) vorgesehenen Nuten (25, 35) hervortreten, um mit den in die Nuten eingreifenden Kontakten der Anzeigeeinrichtung (150) zur Anlage zu kommen.

6. Anzeigevorrichtung nach Anspruch 5, dadurch gekennzeichnet, daß die Bahnen (200) aus elektrisch leitendem Material im Bereich der Nuten (25, 35) leichte Krümmungen (207) aufweisen.

7. Anzeigevorrichtung nach einem der Ansprüche 1 bis 6, dadurch gekennzeichnet, daß die Platte (1) außerdem eine Zunge (40) aufweist, welche mit parallelen elektrischen Leiterbahnen (208), welche geeignet sind, zur Verwendung mit externen elektrischen Stromversorgungseinrichtungen verbunden zu werden, versehen ist und mit dem Hauptkörper (10) der Platte (1) über zwei parallele Faltlinien (41, 51) derart verbunden ist, daß die Zunge (40) nach Faltung um diese Linien sich annähernd senkrecht zum Boden (10) des Gehäuses und hinter dessen Rand erstreckt.

8. Anzeigevorrichtung nach einem der Ansprüche 1 bis 7, dadurch gekennzeichnet, daß eine der Wände (10, 20) des Gehäuses eine Steuerschaltung für die Anzeigeeinrichtung (150) trägt, welche mit den Bahnen (200) aus elektrisch leitendem Material verbunden ist.

9. Anzeigevorrichtung nach Anspruch 8, dadurch gekennzeichnet, daß eine der Wände (10, 20, 30) des Gehäuses diskrete Bauelemente (R) trägt, welche zum Zusammenwirken mit dem Steuerkreis geeignet sind.

10. Anzeigevorrichtung nach einem der Ansprüche 1 bis 9, dadurch gekennzeichnet, daß eine Bodenwand (10) des Gehäuses eine Lichtquelle (111) trägt.

11. Anzeigevorrichtung nach Anspruch 10, dadurch gekennzeichnet, daß die Bodenwand (10) zur Aufnahme der Lichtquelle (111) mit einer Bajonettbefestigung geeignet ist.

12. Anzeigevorrichtung nach einem der Ansprüche 10 oder 11, dadurch gekennzeichnet, daß die Seitenwände (20, 30) des Gehäuses auf ihren gegenüberliegenden Oberflächen (23, 33) einen Reflektor bildende Strukturen (24, 34) besitzen, welcher in der Lage ist, das Licht, welches er von der Lichtquelle (111) empfängt, zur der Anzeigeeinrichtung (150) hinzulenken.

13. Anzeigevorrichtung nach Anspruch 12, dadurch gekennzeichnet, daß die genannten, einen Reflektor bildenden Strukturen (24, 34) einen Reflektor mit parabolischem oder paraboloidem Verlauf definieren.

14. Anzeigevorrichtung nach einem der Ansprüche 1 bis 13, dadurch gekennzeichnet, daß mindestens eine an einer Seitenwand (20, 30) des Gehäuses angelenkte Klappe (60, 70) einen Druckknopf (100) zur Steuerung der Vorrichtung enthält.

15. Anzeigevorrichtung nach Anspruch 14, dadurch gekennzeichnet, daß jede Klappe (60, 70) mit der Seitenwand (20, 30) des Gehäuses über drei Faltlinien (63, 64, 65) verbunden ist.

16. Anzeigevorrichtung nach einem der Ansprüche 14 oder 15, dadurch gekennzeichnet, daß jede Klappe (60, 70) durch feststehenden Winkel (37) der Seitenwände (20, 30) des Gehäuses gestützt wird.

17. Anzeigevorrichtung nach einem der Ansprüche 1 bis 16, dadurch gekennzeichnet, daß die Faltlinien (21, 31, 41, 51) durch beiderseitig angefaste Einkerbungen in der Platte (1) gebildet sind.

18. Anzeigevorrichtung nach einem der Ansprüche 1 bis 17, dadurch gekennzeichnet, daß die Faltscharniere zwischen den verschiedenen Elementen der Platte durch die Bahnen (200) aus elektrisch leitendem Material gebildet sind.

FIG_1

FIG_2

FIG_3

FIG_7

FIG_6

FIG_4

FIG_5

FIG_12

FIG_11

FIG_10

FIG_8

FIG_9

4

FIG.13

FIG.14

121    R    120

19    19

19

123    29    200    122    29

## FIG.15

22

207    150    151

25

20

200

## FIG.16